# FASCICULE DE BREVET EUROPEEN

(11) **EP 3 074 815 B1**
(45) Date de publication et mention de la délivrance du brevet: **22.07.2020**
(21) Numéro de dépôt: 14830971.9
(22) Date de dépôt: 28.11.2014
(51) Int. Cl.: G02F 1/35, G02F 1/39

(54) **SYSTÈME POUR GÉNÉRER DES IMPULSIONS OPTIQUES COURTES DE DURÉE INFÉRIEURE À LA PÉRIODE DE LA PORTEUSE OPTIQUE UTILISANT LE PRINCIPE DE L'AMPLIFICATION PARAMÉTRIQUE**
SYSTEM NACH DEM PRINZIP DER PARAMETRISCHEN VERSTÄRKUNG ZUR ERZEUGUNG KURZER OPTISCHER IMPULSE VON KÜRZERER DAUER ALS DER ZEIT DES OPTISCHEN TRÄGERS
SYSTEM USING THE PRINCIPLE OF PARAMETRIC AMPLIFICATION TO GENERATE SHORT OPTICAL PULSES OF A DURATION SHORTER THAN THE PERIOD OF THE OPTICAL CARRIER

(30) Priorité: 28.11.2013 FR 1361742
(43) Date de publication de la demande: 05.10.2016
(73) Titulaire: Fastlite, 06600 Antibes (FR)
(72) Inventeur: FORGET, Nicolas, 06560 Valbonne (FR)
(74) Mandataire: Mazabraud, Xavier
(86) Numéro de dépôt international: PCT/FR2014/053081
(87) Numéro de publication internationale: WO 2015/079187

(56) Documents cités:
- WO-A1-2005/112207
- DORRER C ET AL: "HIGH-CONTRAST OPTICAL-PARAMETRIC AMPLIFIER AS A FRONT END OF HIGH-POWER LASER SYSTEMS", OPTICS LETTERS, OPTICAL SOCIETY OF AMERICA, vol. 32, no. 15, 1 août 2007 (2007-08-01), pages 2143-2145, XP001506852, ISSN: 0146-9592, DOI: 10.1364/OL.32.002143
- Y Y LI ET AL: "Carrier-envelope phase stabilized high temporal contrast femtosecond laser source at 1053 nm", LASER PHYSICS LETTERS, vol. 10, no. 7, 23 mai 2013 (2013-05-23), page 075403, XP055167016, ISSN: 1612-2011, DOI: 10.1088/1612-2011/10/7/075403
- ADACHI S ET AL: "1.5 MJ, FS PARAMETRIC CHIRPED-PULSE AMPLIFICATION SYSTEM AT 1 KHZ", OPTICS LETTERS, OPTICAL SOCIETY OF AMERICA, US, vol. 32, no. 17, 1 septembre 2007 (2007-09-01), pages 2487-2489, XP001507574, ISSN: 0146-9592, DOI: 10.1364/OL.32.002487
- MUCKE O D ET AL: "Infrared multimillijoule single-filament supercontinuum generation", LASERS AND ELECTRO-OPTICS, 2009 AND 2009 CONFERENCE ON QUANTUM ELECTRONICS AND LASER SCIENCE CONFERENCE. CLEO/QELS 2009. CONFERENCE ON, IEEE, PISCATAWAY, NJ, USA, 2 juin 2009 (2009-06-02), pages 1-2, XP031521863, ISBN: 978-1-55752-869-8
- MAXIMILIAN BRADLER ET AL: "Mid-IR femtosecond pulse generation on the microjoule level up to 5 ìm at high repetition rates", OPTICS LETTERS, OPTICAL SOCIETY OF AMERICA, US, vol. 36, no. 21, 1 novembre 2011 (2011-11-01), pages 4212-4214, XP001570750, ISSN: 0146-9592, DOI: 10.1364/OL.36.004212 [extrait le 2011-10-25]

## Description

La présente invention concerne un générateur et un procédé pour la génération d'impulsions optiques de durée inférieure au cycle optique dans l'infrarouge.

Ce dispositif et ce procédé s'appliquent notamment à l'amplification paramétrique optique simultanée, colinéaire et cohérente de deux impulsions harmoniques de même polarisation.

D'une façon générale, on sait que les sources laser pulsées sont caractérisées par un confinement temporel de l'émission lumineuse. Il est habituel de décrire le champ électrique de ces impulsions en termes d'enveloppe et de porteuse : un champ électrique est alors le produit d'un champ oscillant avec une période notée T₀=λ₀/c (porteuse optique) par une fonction lentement variable à l'échelle de T₀ (enveloppe). Pour les sources laser ultra-brèves, la durée de l'enveloppe est typiquement de quelques dizaines de femto-secondes (1femto-seconde = 10⁻¹⁵s) soit une durée typiquement supérieure à la période du cycle optique dans le proche ou moyen infrarouge. A 800 nm, par exemple, le cycle optique est de 2.7 femto-seconde.

Pour certaines applications, des impulsions de durée égale ou inférieure au cycle optique - ci-après nommées impulsions sub-cycles - sont avantageuses. Le champ électrique est alors un champ transitoire, ce qui est une condition favorable à la génération d'harmoniques élevées X-UV dans les gaz ou les solides. De telles impulsions permettent, en particulier, de générer efficacement des impulsions atto-secondes dont la durée peut atteindre quelques dizaines d'atto-secondes (latto-seconde = 10⁻¹⁸s) («Tailoring a 67 attosecond pulse through advantageous phase-mismatch », K. Zhao et al, Optics Letters 37, 3891-3893 (2012).)

La génération et l'amplification d'impulsions optiques de durée sub-cycle est cependant difficile en raison de la bande spectrale associée. Une impulsion sub-cycle nécessite en effet un support spectral qui correspond à environ une octave. Autrement dit, le spectre d'une impulsion sub-cycle dont la porteuse est à la fréquence optique υ₀ doit couvrir au minimum la plage spectrale [0.5 υ₀, 1.5 υ₀]. De telles bandes sont typiquement supérieures à ce que les milieux laser permettent et il faut recourir à des techniques d'amplification non linéaires complexes.

Par ailleurs, pour être expérimentalement utilisable, il est préférable que l'enveloppe des impulsions soit parfaitement synchronisée avec la phase de la porteuse optique. La stabilisation et le contrôle de la phase relative entre l'enveloppe et la porteuse (phase désignée par l'acronyme anglo-saxon CEP pour Carrier-Enveloppe Phase) sont en effet nécessaires pour que le champ électrique conserve ses propriétés d'une impulsion à l'autre. La stabilisation de la CEP requiert des dispositifs élaborés et coûteux dont la mise en œuvre est souvent complexe.

A titre d'exemple, la publication «High-energy pulse synthesis with sub-cycle waveform control for strong-field physics» par S-W Huang et al. (Nature Photonics 5, 475-479 (2011)) décrit un concept de source comprenant un générateur d'impulsions ultra-courtes dont la phase CEP est stabilisée activement, un dispositif pour étendre le spectre de ces impulsions dans l'infrarouge, deux façonneurs d'impulsion, deux séries d'amplificateurs paramétriques optiques pompés non-colinéairement par deux longueurs d'onde de pompe et un système de mise en phase contrôlé par un appareil de mesure basé sur une détection de corrélation croisée. La publication "Infrared Multimilijoule Single-Filament Supercontinuum Generation", de O.D. Mücke et al. (Conférence 2009 OSA/CLEO/IQEC, JWD6) est un autre exemple de génération d'imulsions courtes CEP-stables.

L'objet de l'invention est de proposer un dispositif permettant la génération d'impulsions optiques de durées sub-cycle et CEP-stables au moyen d'un amplificateur paramétrique optique à dérive de fréquence modifié de manière à ne nécessiter ni un spectre initial couvrant l'octave, ni un processus d'élargissement spectral à l'octave, ni une stabilisation active de la CEP. L'idée maîtresse de l'invention repose sur la synthèse cohérente et la co-amplification de deux bandes spectrales harmoniques.

L'invention a pour objet un système pour générer des impulsions optiques courtes de durée inférieure à la période de la porteuse optique utilisant le principe de l'amplification comme indiqué dans les revendications.

Un tel système peut en outre comprendre un dispositif dispersif réalisant une compression et amenant les impulsions issues du dispositif programmable à leur durée minimale.

Ce système peut comprendre un dispositif d'amplification paramétrique recevant les impulsions non comprimées issues du dispositif programmable.

Un ou chaque dispositif programmable de contrôle du délai et de la phase spectrale peut être un filtre acousto-optique dispersif programmable.

Le système selon l'invention peut encore comprendre une source de pompe pour l'un et/ou l'autre des générateurs, ladite source de pompe comprenant de préférence des moyens d'amplification par des matériaux dopés aux ions Erbium.

Selon un premier mode de réalisation, le premier générateur est obtenu à partir de la source de pompe par un processus optique non linéaire.

Selon un deuxième mode de réalisation, le deuxième générateur est obtenu à partir de la source de pompe par un processus optique non linéaire.

Lorsque les générateurs comprennent des sources indépendantes, le système peut avantageusement comprendre des moyens pour synchroniser les impulsions issues des premier et deuxième générateurs.

Un mode de mise en œuvre d'un dispositif selon l'invention est décrit ci-après, à titre d'exemple non limitatif, avec référence aux dessins annexés dans lesquels :
- la figure 1 est une représentation schématique de la structure du système optique selon l'invention ; et,
- la figure 2 illustre des spectres obtenus aux divers endroits du système de la figure 1.

L'amplification d'impulsions lasers ultracourtes par effet paramétrique est décrite dans la littérature. Une impulsion « signal », de fréquence optique centrale f1, interagit dans un matériau présentant des propriétés optiques non linéaires avec une impulsion de puissance plus élevée (impulsion de «pompe ») et de fréquence optique f. Le contenu fréquentiel de l'impulsion « signal » doit être large pour permettre la production d'impulsions ultracourtes, l'impulsion de « pompe » étant généralement à bande spectrale plus étroite. Au cours de l'interaction, une partie de l'énergie de l'impulsion de « pompe » est transférée à l'impulsion « signal » qui est amplifiée. Simultanément, une troisième impulsion est générée et co-amplifiée. Cette troisième impulsion est désignée dans la littérature anglo-saxonne par le terme «idler» et les relations de conservation de l'énergie imposent à cette impulsion d'avoir pour fréquence centrale f2=f-f1. La contrainte d'« accord de phase » impose également que la CEP de l'impulsion « idler » soit égale, à une constante près, à la différence entre les CEP des impulsions « pompe » et « signal ». Si cette différence est constante de manière répétable (c'est-à-dire d'une impulsion à une autre), alors la CEP de l'impulsion «idler» est stable dans le temps, même si ni l'impulsion « pompe » ni l'impulsion « signal » ne possèdent cette propriété.

Un choix de fréquence optique remarquable pour l'impulsion signal est f1=2^{∗}f/3. En effet, dans ce cas particulier, la fréquence optique de l'impulsion « idler» est f2=f-f1=f/3=f1/2. La fréquence optique f1 de l'impulsion « signal » est alors l'exacte harmonique de l'impulsion « idler », de fréquence f2. Ce choix de fréquences optiques est ci-après nommé « 3-2-1 » par référence aux valeurs des longueurs d'onde optiques des impulsions « pompe », « signal » et « idler» (respectivement λ/3, λ/2 et λ si λ est la longueur d'onde de l' «idler »).

Pour la génération d'impulsions à forte puissance, on combine le principe de l'amplification paramétrique avec celui de l'amplification à dérive de fréquence qui consiste à étendre temporellement l'impulsion « signal » et l'impulsion de « pompe » pour diminuer la puissance instantanée, le « signal » amplifié étant ultérieurement recomprimé pour obtenir une impulsion courte. On parle alors d'amplification paramétrique à dérive de fréquence, désignée par le sigle OPCPA (Optical Parametric Chirped Pulse Amplification) dans la littérature anglo-saxonne. En sortie de l'amplificateur paramétrique optique, l'impulsion « idler» présente une dérive de fréquence qui est, dans le cas particulier d'une « pompe » quasi-monochromatique ou de largeur spectrale inférieure à celle du « signal », d'un signe opposé à celui de l'impulsion « signal ». Il n'est donc pas possible, en général, d'utiliser un seul et même dispositif pour recomprimer les impulsions « idler». En pratique, il serait nécessaire de séparer géométriquement les faisceaux « signal » et « idler», de les recomprimer séparément puis de les recombiner de manière cohérente. Ces opérations ne sont pas triviales, présentent des difficultés techniques et une complexité majeures et n'ont, à notre connaissance, jamais fait l'objet de publication. Par ailleurs, la séparation spatiale des faisceaux réintroduirait des sources possibles de fluctuation de la phase relative entre les impulsions « signal » et « idler», ce qui complique d'autant plus leur recombinaison.

La présente invention se place dans le contexte d'une architecture OPCPA de type « 3-2-1 » comprenant au moins deux amplificateurs paramétriques et pour lequel les impulsions « signal et « pompe » présentent une différence de CEP stable dans le temps. L'invention introduit deux dispositifs supplémentaires dans l'architecture OPCPA :
- d'une part, un étage de génération de second harmonique inséré entre deux amplificateurs paramétriques optiques,
- d'autre part, un dispositif de renversement du signe de la dérive de fréquence et de mise en phase.

L'étage de second harmonique permet de générer à partir de l'impulsion « idler» issue du premier amplificateur paramétrique (de fréquence optique f1/3) une impulsion à la fréquence optique 2^{∗}f1/3 qui est identique à la fréquence optique de l'impulsion « signal » du premier amplificateur paramétrique. Cette identité résulte directement du choix de fréquences « 3-2-1» et permet de poursuivre l'amplification paramétrique dans les étages d'amplification suivant. L'impulsion « idler» étant CEP-stable, l'impulsion « idler » doublée en fréquence l'est également et la différence de CEP entre celles-ci est également stable dans le temps. Un accord de phase de type 0 permet de plus au second harmonique d'être polarisé linéairement comme l'impulsion « idler». La combinaison de l'impulsion « idler» et de son harmonique présente donc toutes les propriétés recherchées : une largeur spectrale supérieure à l'octave, une cohérence spatiale et spectrale, une CEP stable. Les impulsions harmoniques forment une seule impulsion que l'on peut décrire comme une impulsion de porteuse optique f/2 et de largeur spectrale >f/3. Si la largeur spectrale de l'impulsion «signal» de départ est, par exemple, de f/6 alors les impulsions harmoniques combinées couvrent une largeur spectrale de f/2 soit une octave complète par rapport à la porteuse optique.

Afin de procéder à l'amplification de ces impulsions il est nécessaire d'accorder les dérives de fréquence, les délais et les phases absolues entre ces deux bandes avec une précision en délai de l'ordre d'une fraction de période optique, typiquement très inférieure à 1 fs. Cette opération ultra-précise peut être avantageusement réalisée au moyen d'un dispositif dispersif programmable tel qu'un filtre acousto-optique dispersif programmable (AOPDF).

Des sources de lumière, combinant un amplificateur paramétrique avec des dispositifs d'optique non linéaire extérieurs comme un générateur de second harmonique ou un générateur de différence de fréquence dans le but d'augmenter la gamme des fréquences pouvant être couvertes, ont été décrites dans la littérature (Miller et al., PCT WO 2005/112207 A1).

La présente invention utilise une telle combinaison, mais elle se distingue notamment de Miller et al en ceci que :
- l'invention permet la co-amplification des impulsions de fréquence f2 et 2^{∗}f2 dans un seul et même amplificateur paramétrique : même impulsions de « pompe », même polarisation, même direction de propagation, même type de cristal non linéaire,
- l'invention ne nécessite pas une impulsion « signal » de départ possédant une largeur spectrale approchant ou couvrant l'octave ; en effet, l'invention permet de générer l'octave à partir d'une largeur spectrale plus réduite,
- la génération de second harmonique est essentielle : elle n'est pas utilisée pour augmenter la couverture spectrale de l'invention.

Si la source du « signal » à la fréquence f1 était indépendante du laser de «pompe» à la fréquence f, la réalisation de l'invention demanderait un mécanisme complexe de synchronisation entre ces deux sources laser, afin d'assurer qu'elles soient simultanément présentes dans l'amplificateur paramétrique. Une réalisation préférée de l'invention consiste donc à générer, par exemple, la source du « signal » à partir de l'impulsion de « pompe », selon une procédure décrite par exemple par Cerullo et al. (« Ultrafast optical parametric amplifiers », Rev. Sci. Instrum. 74, 1 (2003)). Plusieurs mécanismes à base d'optique non-linéaire sont connus pour générer une impulsion large bande, dite supercontinuum, à partir d'une impulsion intense de bande spectrale plus étroite et de fréquence centrale différente. Il s'agit par exemple de l'interaction non linéaire avec le verre dans une fibre optique, de l'interaction non linéaire avec un cristal massif ou de l'interaction avec un gaz dans une fibre creuse. On utilisera une interaction de ce type pour générer à partir de la « pompe » de fréquence f une impulsion de spectre large incluant la fréquence 2^{∗}f/3. Un filtre spectral peut extraire de ce spectre large les fréquences destinées à former l'impulsion « signal » qui est ensuite amplifiée par l'amplificateur paramétrique.

Une seconde possibilité est de générer la source de « pompe » à partir d'une impulsion « signal » par un mécanisme équivalent : on utilise une interaction non linéaire pour générer à partir du « signal » de fréquence 2^{∗}f/3 une impulsion de spectre large incluant la fréquence f. Un filtre spectral extrait de ce spectre large les fréquences destinées à former l'impulsion « pompe » qui est ensuite amplifiée par des amplificateurs laser de puissance.

Une troisième possibilité, décrite, par exemple, par Adachi et al. (« 1.5 mJ , 6.4 fs parametric chirped-pulse amplification system at 1 kHz», Optics Letters, Vol. 32, Issue 17, pp. 2487-2489 (2007)) est de partir d'une source générant des impulsions possédant une bande spectrale couvrant à la fois la fréquence f et la fréquence 2^{∗}f/3. Un filtre spectral extrait de ce spectre large initial un intervalle de fréquences ensuite amplifié par des amplificateurs laser de puissance et enfin converti par génération de second harmonique pour former l'impulsion « pompe ». Un second filtre spectral extrait du spectre large initial les fréquences destinées à former l'impulsion « signal » qui est ensuite amplifiée par l'amplificateur paramétrique.

En résumé, le principe de l'invention permet, à partir d'une impulsion de « pompe » de spectre étroit et de fréquence f et d'une impulsion « signal » synchrone de spectre large centré à la fréquence f1=2^{∗}f/3, de générer et d'amplifier une impulsion de largeur spectrale supérieure à f/3 à la fréquence optique f/2. Cette génération est assurée par les éléments suivants :
- un étage d'amplification paramétrique qui crée, par différence de fréquence, une onde complémentaire à la fréquence f2=f-f1,
- le filtrage de la bande autour de f2=f-f1 et la génération du second harmonique 2^{∗}f2=f1 par un accord de phase de type 0,
- le retournement et l'ajustement de la dérive de fréquence de l'impulsion à la fréquence 2^{∗}f2 afin que cette impulsion interfère constructivement avec l'impulsion à la fréquence f2 dans le compresseur final.

De plus, le choix «3-2-1», qui est un caractère essentiel de l'invention, garantit que les impulsions aux fréquences f2 et 2^{∗}f2 peuvent être co-amplifiées dans les étages d'amplification paramétriques suivants au moyen des mêmes impulsions de « pompe » que pour le premier étage d'amplification paramétrique.

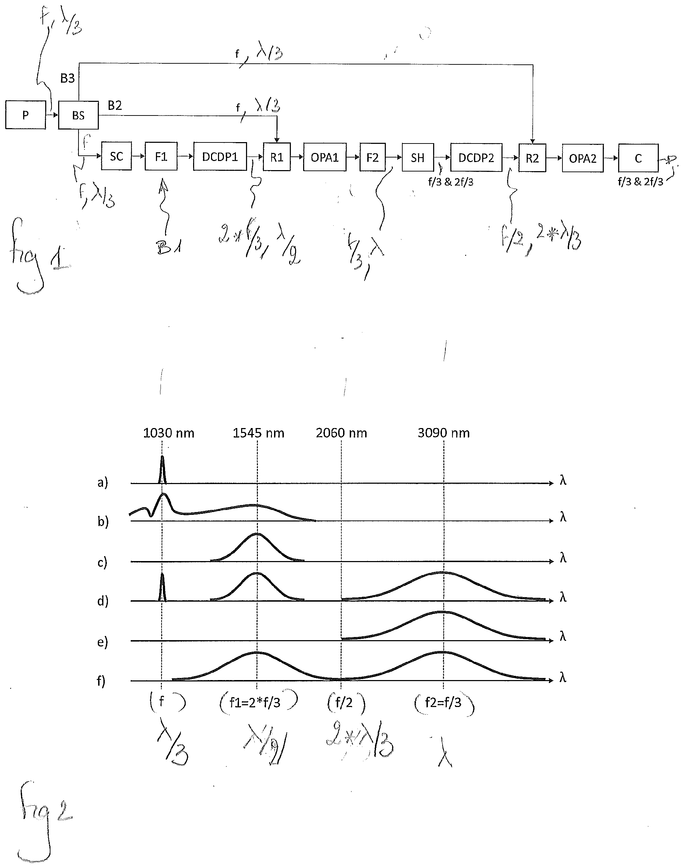

L'invention sera mieux comprise en considérant l'exemple de réalisation suivant présenté sur la figure 1. La source de pompe P est constituée par une chaine de génération et d'amplification d'impulsions à base de matériaux amplificateurs contenant des ions Ytterbium. Elle émet des impulsions intenses à la longueur d'onde de λ/3, correspondant à la fréquence f. Dans l'exemple illustré, λ/3 = 1030 nm. La sortie optique de cette source est divisée par un séparateur BS en faisceaux injectés respectivement dans trois bras B1, B2 et B3. Le faisceau du premier bras B1 est focalisé dans un cristal SC de YAG permettant de générer un supercontinuum couvrant au moins la plage 1300-1900nm. La sortie de ce supercontinuum sert de voie « signal ».

Le faisceau du deuxième bras B2 est centré sur la longueur d'onde λ/3 et la fréquence f. Le deuxième bras B2 sert de voie de « pompe ».

Les faisceaux issus du premier bras B1 et du deuxième bras B2 sont combinés colinéairement dans un premier dispositif de recombinaison R1 et injectés dans un premier amplificateur paramétrique optique OPA1 qui réalise la fonction de différence de fréquences.

Avantageusement, l'impulsion « signal » a été modifiée, avant recombinaison, par un premier dispositif de contrôle du délai et de la phase DCDP1 pour obtenir un recouvrement temporel optimal des impulsions des premiers et deuxièmes bras B1, B2, afin d'optimiser le mécanisme d'amplification paramétrique à dérive de fréquence. Un premier filtre F1 est avantageusement disposé entre la sortie du supercontinuum SC et le premier dispositif de contrôle du délai et de la phase DCDP1, afin de sélectionner un « signal » centré sur la fréquence λ/2 = 1545 nm correspondant à la fréquence f1.

Avantageusement, le premier amplificateur paramétrique optique OPA1 est à base d'un cristal de Niobate de Lithium dopé MgO, dont la polarisation est périodiquement renversée (« Periodically Poled Lithium Niobate »). Ce type de dispositif assure un quasi accord de phase entre les impulsions de longueur d'onde λ/3 à 1030 nm et celles comprises dans la bande 1300-1900nm, permettant l'amplification sur une grande bande spectrale et en configuration colinéaire d'un « signal » centré sur la longueur d'onde λ/3 = 1545 nm.

Une sortie « idler» centrée sur la longueur d'onde λ = 3090 nm est sélectionnée par un deuxième filtre F2. Le filtre F2 est ainsi prévu pour extraire de la sortie du premier amplificateur OPA1 une bande centrée à une longueur d'onde sensiblement égale à λ. Dans l'exemple illustré, ce filtre F2 est constitué d'un ou plusieurs miroirs dichroïques.

La sortie du filtre F2 est injectée dans un cristal non linéaire SH, également du type MgO:PPLN, opérant en générateur de second harmonique.

Un deuxième dispositif de contrôle du délai et de la phase DCDP2 contrôle le délai et la phase des composantes spectrales issues du cristal SH. L'«idler» et son harmonique interfèrent pour former une impulsion dont la longueur d'onde optique moyenne est centrée sur 2^{∗}λ/3 = 2060 nm, correspondant à une fréquence égale à f/2. Si le spectre du « signal » couvre la plage 1300-1900 nm alors l'«idler» et son second harmonique couvrent l'ensemble de la plage spectrale 1125-4345 nm et ce spectre supporte une impulsion de durée sub-cycle.

Le faisceau du troisième bras B3 est centré sur la longueur d'onde λ/3 et la fréquence f. Le troisième bras B3 sert aussi de voie de « pompe ».

Un deuxième dispositif de combinaison R2 combine de manière quasi-colinéaire le faisceau formé par la sortie du deuxième dispositif de contrôle du délai et de la phase DCDP2 avec le faisceau du troisième bras de « pompe » B3 et dirige les faisceaux combinés vers un deuxième amplificateur paramétrique optique OPA2. Cet amplificateur est du même type que le premier OPA1. Il accroit l'énergie de l'impulsion issue du deuxième dispositif de contrôle du délai et de la phase DCDP2.

Enfin, un système dispersif C constitué, par exemple, d'une lame épaisse de Silicium permet de comprimer les impulsions à leur durée minimale et forme une impulsion de durée sub-cycle.

La figure 2 montre schématiquement les spectres obtenus aux diverses étapes du système de la figure 1 :
- Le spectre 2a est le spectre de la source de pompe P ;
- Le spectre 2b est le spectre du supercontinuum en sortie du cristal SC ;
- Le spectre 2c est le spectre obtenu à la sortie du premier filtre F1 ;
- Le spectre 2d est le spectre obtenu à la sortie du premier amplificateur paramétrique OPA1 ;
- Le spectre 2e est le spectre obtenu à la sortie du deuxième filtre F2 ; et,
- Le spectre 2f est le spectre obtenu à la sortie du générateur de second harmonique SH.

Il est évident que les impulsions issues des bras B1 et B2 avant la recombinaison R peuvent être, sans perte de généralité, issues de deux sources optiques synchrones, ci-après nommées générateurs S et P

## Revendications

1. Système pour générer des impulsions optiques courtes de durée inférieure à la période de la porteuse optique utilisant le principe de l'amplification paramétrique, **caractérisé en ce qu'**il comprend :
- un premier générateur d'impulsions optiques (P, B1) délivrant des impulsions à une longueur d'onde sensiblement égale λ/2 et d'une largeur spectrale inférieure à λ/3, ledit premier générateur comprenant un cristal (SC) permettant de générer un supercontinuum et un premier filtre (F1), avantageusement disposé à la sortie dudit cristal (SC), ledit premier filtre permttant de sélectionner un signal centré sur une fréquence (f1) égale à λ/2 ;
- un deuxième générateur d'impulsions optiques (B2) délivrant des impulsions d'une durée inférieure à 10 picosecondes à une longueur d'onde sensiblement égale à λ/3 ;
- un dispositif (R1) pour recombiner colinéairement les impulsions issues des premier et deuxième générateurs d'impulsions optiques ;
- un premier dispositif d'amplification paramétrique (OPA1) recevant en entrée la sortie dudit dispositif de recombinaison (R1) ;
- un deuxième filtre (F2) extrayant de la sortie du premier dispositif d'amplification (OPA1) une bande centrée à une longueur d'onde sensiblement égale à λ ;
- un générateur de second harmonique (SH) recevant en entrée la sortie dudit deuxième filtre (F2) et générant une bande centrée à une longueur d'onde sensiblement égale à λ/2 ;
- un dispositif programmable du contrôle du délai et de la phase spectrale (DCDP2) permettant d'ajuster temporellement les impulsions correspondant auxdites bandes, de manière à permettre la génération, par interférence constructive, d'une impulsion de longueur d'onde sensiblement égale à λ/3 et de durée inférieure à la période du cycle optique.

2. Dispositif selon la revendication 1, **caractérisé en ce qu'**il comprend en outre un dispositif dispersif (C) réalisant une compression et amenant les impulsions issues du dispositif programmable (DCDP2) à leur durée minimale.

3. Système selon l'une des revendications 1 ou 2, **caractérisé en ce qu'**il comprend en outre un dispositif d'amplification paramétrique (OPA2) recevant les impulsions non comprimées issues du dispositif programmable (DCDP2).

4. Système selon l'une des revendications 1 à 3, **caractérisé en ce qu'**un ou chaque dispositif programmable de contrôle du délai et de la phase spectrale (DCDP1, DCDP2) est un filtre acousto-optique dispersif programmable.

5. Système selon l'une des revendications 1 à 4, **caractérisé en ce qu'**il comprend une source de pompe (P) pour les générateurs, ladite source de pompe comprenant de préférence des moyens d'amplification par des matériaux dopés aux ions Ytterbium.

6. Système selon la revendication 5, **caractérisé en ce que** le premier générateur est obtenu à partir de la source de pompe (P) par un processus optique non linéaire (B1).

7. Système selon la revendication 5, **caractérisé en ce que** le deuxième générateur est obtenu à partir de la source de pompe (P) par un processus optique non linéaire.

8. Système selon la revendication 1, **caractérisé en ce qu'**il comprend des moyens pour synchroniser les impulsions issues des premier et deuxième générateurs.

## Patentansprüche

1. System zur Erzeugung von kurzen optischen Impulsen von kürzerer Dauer als der Periode des optischen Trägers unter Anwendung des Prinzips der parametrischen Verstärkung, **dadurch gekennzeichnet, dass** das System umfasst:
- einen ersten optischen Pulsgenerator (P, B1), der Impulse mit einer Wellenlänge, die im Wesentlichen gleich λ/2 ist, und mit einer Spektralbreite, die kleiner λ/3 ist, liefert, wobei der erste Generator einen Kristall (SC) umfasst, der die Erzeugung eines Superkontinuums ermöglicht, und ein erstes Filter (F1), das in vorteilhafter Weise am Ausgang des Kristalls (SC) angeordnet ist, wobei das erste Filter die Auswahl eines Signals ermöglicht, das auf eine Frequenz (f1) gleich λ/2 zentriert ist;
- einen zweiten optischen Pulsgenerator (B2), der Impulse mit einer Dauer liefert, die bei einer Wellenlänge von im Wesentlichen gleich λ/3 kürzer als 10 Pikosekunden ist;
- eine Einrichtung (R1) zur kollinearen Rekombination der Impulse aus dem ersten und dem zweiten optischen Pulsgenerator;
- eine erste parametrische Verstärkungseinrichtung (OPA1), die als Eingang den Ausgang der Rekombinationseinrichtung (R1) empfängt;
- ein zweites Filter (F2), das aus dem Ausgang der ersten Verstärkungseinrichtung (OPA1) ein Band extrahiert, das auf eine Wellenlänge zentriert ist, die im Wesentlichen gleich λ ist;
- einen Generator für die zweite Harmonische (SH), der als Eingang den Ausgang des zweiten Filters (F2) empfängt und ein Band erzeugt, das auf die Wellenlänge zentriert ist, die im Wesentlichen gleich λ/2 ist;
- eine programmierbare Verzögerungs- und Spektralphasensteuerungseinrichtung (DCPP2), die eine zeitliche Einstellung der diesen Bändern entsprechenden Impulse derart ermöglicht, dass durch eine konstruktive Interferenz die Erzeugung eines Impulses mit einer Wellenlänge im Wesentlichen gleich λ/3 und mit einer Dauer, die kürzer ist als die Periode des optischen Zyklus, ermöglicht.

2. Vorrichtung nach Anspruch 1, **dadurch gekennzeichnet, dass** diese ferner eine Streueinrichtung (C) umfasst, die eine Kompression ausführt und die die Impulse aus der programmierbaren Einrichtung (DCDP2) auf ihre minimale Dauer bringt.

3. System nach einem der Ansprüche 1 oder 2, **dadurch gekennzeichnet, dass** dieses ferner eine parametrische Verstärkungseinrichtung (OPA2) umfasst, die die nicht komprimierten Impulse aus der programmierbaren Einrichtung (DCDP2) empfängt.

4. System nach einem der Ansprüche 1 bis 3, **dadurch gekennzeichnet, dass** eine oder jede programmierbare Verzögerungs- und Spektralphasensteuerungseinrichtung (DCDP1, DCDP2) ein programmierbares akusto-optisches Streufilter ist.

5. System nach einem der Ansprüche 1 bis 4, **dadurch gekennzeichnet, dass** dieses eine Pumpquelle (P) für die Generatoren umfasst, wobei die Pumpquelle vorzugsweise Mittel zur Verstärkung durch Materialien umfasst, die mit Ytterbium-Ionen dotiert sind.

6. System nach Anspruch 5, **dadurch gekennzeichnet, dass** der erste Generator durch einen nichtlinearen optischen Prozess (B1) aus der Pumpquelle (P) erhalten wird.

7. System nach Anspruch 5, **dadurch gekennzeichnet, dass** der zweite Generator durch einen nichtlinearen optischen Prozess (B1) aus der Pumpquelle (P) erhalten wird.

8. System nach Anspruch 1, **dadurch gekennzeichnet, dass** dieses Mittel zum Synchronisieren der Impulse aus dem ersten und dem zweiten Generator umfasst.

## Claims

1. System for generating short optical pulses of a duration shorter than the period of the optical carrier using the principle of the parametric amplification, **characterised in that** it comprises:
- a first generator of optical pulses (P, B1) outputting pulses with a wavelength substantially equal to λ/2 and a spectral width less than λ/3, said first generator comprising a crystal (SC) making it possible to generate a supercontinuum and a first filter (F1) advantageously arranged at the output of said crystal (SC), said first filter enabling to select a signal centered on a frequency (f1) equal to λ/2.
- a second generator of optical pulses (B2) outputting pulses of a duration less than 10 picoseconds at a wavelength substantially equal to λ/3;
- a device (R1) for collinearly recombining the pulses from the first and second optical pulse generators;
- a first parametric amplification device (OPA1) receiving the output of said recombination device (R1) as input;
- a second filter (F2) extracting from the output of the first parametric amplification device (OPA1) a band centred about a wavelength substantially equal to λ;
- a second harmonic generator (SH) receiving the output of said second filter (F2) as input and generating a band centred about a wavelength substantially equal to λ/2;
- a programmable device for controlling the delay and the spectral phase (DCDP2) making it possible to temporally adjust the pulses corresponding to said bands, in such a way as to allow for the generation, by constructive interference, of a pulse with a wavelength substantially equal to λ/3 and of a duration less than the period of the optical cycle.

2. Device according to claim 1, **characterised in that** it further comprises a dispersive device (C) carrying out a compression and bringing the pulses from the programmable device (DCDP2) to their minimum duration.

3. System according to one of claims 1 or 2, **characterised in that** it further comprises a parametric amplification device (OPA2) receiving the uncompressed pulses from the programmable device (DCDP2).

4. System according to one of claims 1 to 3, **characterised in that** one or each programmable device for controlling the delay and the spectral phase (DCDP1, DCDP2) is an acousto-optic programmable dispersive filter.

5. System according to one of claims 1 to 4, **characterised in that** it comprises a pump source (P) for the generators, with said pump source comprising preferably means of amplification by materials doped with Erbium ions.

6. System according to claim 5, **characterised in that** the first generator is obtained using the pump source (P) by a non-linear optical process (B1).

7. System according to claim 5, **characterised in that** the second generator is obtained using the pump source (P) by a non-linear optical process.

8. System according to claim 1, **characterised in that** it comprises means for synchronising the pulses from the first and second generators.
